(19) Europäisches Patentamt
European Patent Office
Office européen des brevets

(11) **EP 2 001 176 A2**

(12) **EUROPEAN PATENT APPLICATION**

(43) Date of publication:
**10.12.2008 Bulletin 2008/50**

(51) Int Cl.:
***H04L 12/56*** *(2006.01)*

(21) Application number: **08010335.1**

(22) Date of filing: **06.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.06.2007 US 942944 P**

(71) Applicants:
• **Interuniversitair Micro-Elektronica Centrum (IMEC)**
 **3001 Leuven (BE)**

• **Katholieke Universiteit Leuven**
 **3000 Leuven (BE)**

(72) Inventors:
• **Timmers, Michael**
 **3000 Leuven (BE)**
• **Dejonghe, Antoine**
 **3000 Leuven (BE)**

(74) Representative: **BiiP cvba**
 **Culliganlaan 1B**
 **1831 Diegem (Bruxelles) (BE)**

(54) **Method for configuring multi-channel communication**

(57)     The present invention is related to a method for configuring a communication set-up, along a communication means with a plurality of non-overlapping channels and between a plurality of communication units with first communication units and second communication units, said first communication units being privileged in the communication set-up with respect to said second communication units, said second communication units having dynamically adaptable transceivers enabling channel switching, at least one of the second communication units being within the communication range of one of the first communication units. The method comprises the step of performing on at least one of the second communication units:

(1) a step of determining information on the availability of the channels of the communication means for communication by the second communication units, at least taking into account whether the first communication units are active or not on the channels,

(2) a step of selecting based on the information which channels to use for communication by the second communication units and subsequently,

(3) adapting the second communication units transceivers for data communication via the selected channels.

Fig.3

**Description**

**Field of the Invention**

The present invention generally relates to a protocol for multi-channel communication, which is especially suitable for cognitive radio networks.

**Background of the Invention**

Due to the accelerated deployment of broadband communication systems and the current fixed frequency allocation scheme, spectrum is becoming a major bottleneck. However, experiments indicate as much as 85% of spectrum being unused at a given time and place. There is thus obviously a need for more effective spectrum allocation.

This observation has led to the new paradigm of opportunistic spectrum sharing, where users can actively seek out unused spectrum in licensed bands and communicate using these white holes. This vision is supported by regulatory bodies, such as the Federal Communications Commission (FCC) and the European Commission. The concept is also often referred to as cognitive radio. The term cognitive radio generally refers to a radio employing model-based reasoning to autonomously change its transmission parameters based on interaction with the complex environment (radio scene, application and user requirements) in which it operates. However, in the context of the present invention it is to be construed as a radio system co-existing with licensed wireless systems by use of the same spectrum resources without significantly interfering with these primary users.

A centrally controlled cognitive radio (CR) scheme is currently being standardized in the IEEE 802.22 Working Group, which defines the physical (PHY) and Medium Access Control (MAC) layers for a novel air interface based on the CR paradigm. The aim is to provide a standard for Wireless Regional Area Networks (WRAN) by exploiting unused spectrum in the TV bands. WRAN can cover up to 100 km. The IEEE 802.22 system specifies a fixed point-to-multipoint wireless air interface whereby a base station (BS) manages its own cell and all associated Consumer Premise Equipments (CPEs). In addition to the traditional role of a base station, the BS also manages the feature of distributed spectrum sensing. The current draft uses an OFDMA modulation at the PHY layer, while the MAC layer enables the CPEs to synchronize and receive control information.

However, in order to enable cognitive behaviour in mesh networking, a distributed CR scheme has to be developed. Since CR nodes (stations) need to be able to hop from channel to channel in order to fully utilize the spectrum opportunities, distributed multichannel MAC protocols can be seen as key enablers for these CR enabled mesh networks. These protocols also have clear advantages over single channel MAC protocols, as they offer reduced interference among users, increased network throughput due to simultaneous transmissions on different channels and a reduction of the number of CR nodes affected by the return of a licensed user.

Many multichannel MAC protocols have been proposed in the literature, which can be organized according to their principle of operation (see e.g. the paper 'Channel-Hopping Multiple Access', Tzamaloukas et al., Proc.ICC2000, June 2000). One can distinguish *single rendez-vous* (SRV) schemes and *multiple rendez-vous* (MRV) schemes. In SRV protocols, exchange of control information occurs on only one channel at any time, while the MRV schemes use several channels in parallel for this purpose. Within the SRV schemes three different classes can further be distinguished : one using a common control channel, another using common hopping and one using a split-phase approach.

Besides the spectrum scarcity, energy consumption is also becoming a key concern. Today there is a continuously growing gap between the available energy, resulting from battery technology evolution and the exponentially increasing energy requirements of emerging radio systems and applications. This is especially true for reconfigurable radio implementations, which are seen as enablers for CR systems.

Now a brief description of the distributed coordination function (DCF) and the power saving mode (PSM) as described in IEEE 802.11 is given.

The DCF of IEEE 802.11 relies on a continuous sensing of the wireless channel. The algorithm used is called Carrier Sense Multiple Access with Collision Avoidance (CSMA/CA). If a station has a packet to transmit, it transmits if the medium is sensed idle longer than a DIFS (DCF Interframe Space). If the station does not remain idle longer than a DIFS, it randomly chooses a backoff from the interval [0, $W$-1], where $W$ is defined as the contention window. This backoff counter is decremented every slot after the channel is sensed idle more than a DIFS. If the backoff counter reaches zero, the station transmits.

A station is also able to reserve a channel for data transmission by exchanging Ready To Send (RTS) and Clear To Send (CTS) packets. If a station has a packet ready for transmission, it can try to send an RTS packet using the DCF. After receiving an RTS packet, the destination replies with a CTS packet. These packets carry the expected duration of the transmission. Nodes overhearing this handshake have to defer their transmissions for this duration. The area around transmitter and receiver is now reserved for their data transmission. The purpose is to avoid the hidden terminal problem, whereby a station is visible from a wireless access point, but not from other stations communicating with said access point.

The idea behind the power saving mode is to let nodes enter a low-power doze state if they will not receive packets. This solves the energy waste due to idle listening, as it occurs in the DCF function of IEEE 802.11, where a radio always needs to be on, even if there are no packets being transmitted.

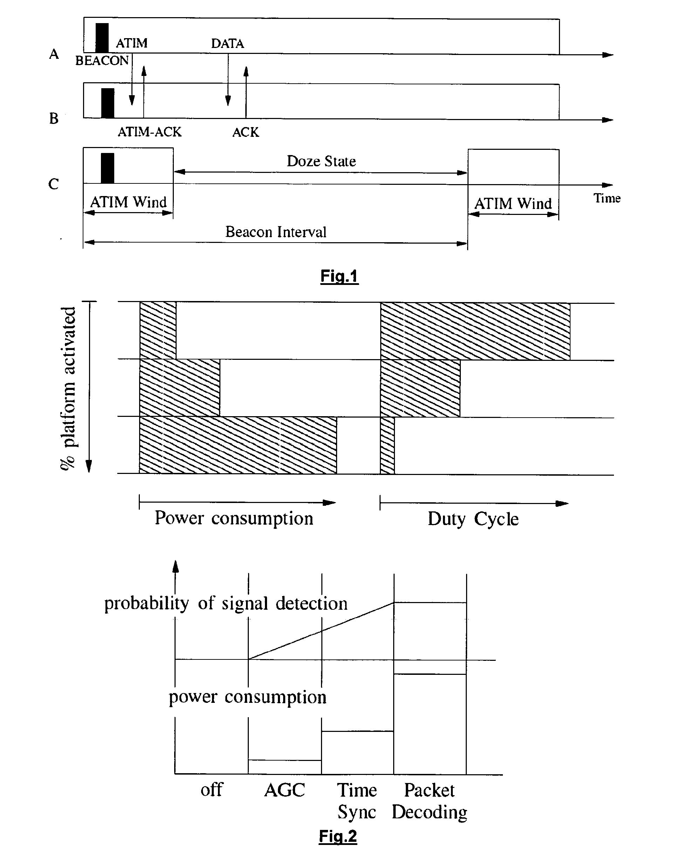

In Fig. 1 the operation of the IEEE 802.11 PSM is shown. Time is divided into beacon intervals and every node in the network is synchronized by periodic beacon transmissions. This means that each node starts and finishes each beacon interval at about the same time. At the start of the beacon interval a small time frame, the Ad-hoc Traffic Indication Message (ATIM) window, is reserved for exchanging ATIM/ATIM-ACK handshakes. Every node should be awake during this interval. If node A has packets buffered for node B, it sends an ATIM packet to B during the ATIM window. If B receives this packet, it replies by sending an ATIM-ACK to A. Both A and B then stay awake for that entire beacon interval. Nodes that did not send or receive an ATIM packet, enter a doze state until the next beacon interval.

Enhancements of this mechanism have been proposed that allow dynamically adjusting the ATIM window length to the traffic load (see M. Miller et al., Improving Power Save Protocols Using Carrier Sensing for Dynamic Advertisement Window, MASS 2005, Nov.2005). There are also a few multichannel MAC protocols that make use of this timing structure. It can be used to solve the multichannel hidden terminal problem or to provide energy savings in these multichannel environments.

### Aims of the invention

The present invention aims to provide an energy-efficient distributed multi-channel method for MAC control for cognitive radio networks.

### Summary of the Invention

A method for (re-)configuring the communication set-up, along a (multi-channel) communication means with a plurality of non-overlapping channels and between a plurality of communication units with first communication units (for primary protected users) and second communication units (for secondary users) is disclosed. The first communication units are differently handled in the communication set-up than the second communication units, in that the first communication units are privileged in the communication set-up with respect to the second communication units. The second communication units have dynamically adaptable transceivers (enabling channel switching) and at least one of the second communication units is within the communication range of one of the first communication units. The method comprises the steps of performing on at least one of the second communication units,

(1) a process of determining information on the availability of the channels of the communication means for communication by the second communication units, at least taking into account whether the primary users are active or not on the channels (SIP vector),
(2) a process of selecting based on the information which channels to use for communication by the second communication units and
(3) subsequently adapting the second communication units transceivers for data communication via the selected channels.
On top of enabling opportunistic spectrum sharing with primary users, the cognitive radio multichannel MAC protocol proposed in this invention is designed taking the energy constraint into account.

The method of the invention is performed in a distributed way, meaning that it is executed by at least two of the second communication units (for secondary users) whereby the distributed information is exploited, meaning that second communication units (of secondary users) not within the interference scope of first communication units (of primary users) can exploit information about such first communication unit (primary user) via another second communication unit (secondary user) being within such scope. The method therefore solves the problem of hidden terminals.

In a preferred embodiment the process of determining information at least takes into account the load of the second communication units on the channels.

Advantageously, the process of determining information includes the process of storing at each of the second communication units a first data structure (SIP vector) indicating for each of the channels whether the primary users are active or not on the channels or whether the second communication is uncertain about the use of the channel by a primary user.

In an embodiment of the invention the process of determining information includes the process of storing at each of the second communication units a second data structure (SCL vector) indicating for each of the channels the load of the second communication units.

The step of detecting (selecting) information about the first (primary) user communication by the secondary users preferably contains the step of determining whether the primary users are active on a channel or not, or whether there is uncertainty about this status and in case a channel is used by first (primary) users. When the status is uncertain, the channel is preferably not considered for secondary user communication until a next (re-)configuration (it temporarily becomes a silent channel). Such a silent channel is then polled during the data communication phase for confirming either the active status or for determining the actual status.

In a preferred embodiment the process of selecting includes the process of at least one of the second communication units sending a first indicator (ATIM) if the second communication unit needs to transmit data, whereby the indicator includes the preferred channel of the second communication unit.

Advantageously, one of the channels (a control channel) is not used by the first communication units and the indicators are sent via that (control) channel. Preferably the control channel can also be used for data communication in phase IV (see below).

The step of selecting advantageously includes the step of selecting the channel with the lowest load as preferred channel.

In another embodiment the step of selecting includes, upon receipt by at least one of the second communication units of the first indicator coming from a sending second communication unit, the step of sending a second indicator (ATIM-ACK) if the receiving second communication unit is able to communicate along the preferred channel.

In another preferred embodiment the method further includes the step of performing data communication with the transceivers adapted in accordance with the selected channels.

In another embodiment the method further includes a step of determining information for those channels where the second communication is uncertain about the primary user use of the channel (SIP vector) (since there is no communication between second communication units and the silenced channel).

In a second aspect the invention relates to a communication system for use in a cognitive radio network comprising a plurality of communication units with first communication units and second communication units. The first communication units are arranged for operating in a privileged mode with respect to the second communication units. The second communication units have dynamically adaptable transceivers for enabling channel switching. At least one of the second communication units is arranged for determining information on the availability for communication of at least some of a plurality of non-overlapping channels, at least taking into account whether the first communication units are active or not on the channels, for selecting based on the information which channels to use for communication and for subsequently adapting the second communication units transceivers for data communication via the selected channels.

In a further aspect the invention relates to a communication device for use as a second communication unit in a communication system as previously described. The communication device can be used in a cognitive radio network that comprises a plurality of first communication units arranged for operating in a privileged mode with respect to said communication device. The communication device comprises a dynamically adaptable transceiver for enabling channel switching and is arranged for determining information on the availability for communication of at least some of a plurality of non-overlapping channels, at least taking into account whether the first communication units are active or not on said channels, for selecting based on the information which channel(s) to use for communication and for subsequently adapting the transceiver for data communication via the selected channels.

Advantageously, the communication device further comprises storage means for storing a first data structure indicative for each of the channels of whether the first communication units are active or not on the channels or whether the communication device is uncertain about said first communication units' use of the channel. The communication device preferably further comprises storage means for storing a second data structure indicative for each of the channels of the load of the communication device.

## Brief Description of the Drawings

Fig. 1 illustrates the power saving mode of IEEE 802.11.
Fig. 2 illustrates a DFE with high power states having a shortened duty cycle.
Fig. 3 illustrates the multichannel MAC protocol of the invention.
Fig. 4 represents the topology of the reference scenario.
Fig. 5 represents the activity of the primary users for the reference scenario. Note that no primary users are present on the control channel.
Fig. 6 represents channel states according to the cognitive radio network.
Fig. 7 represents the channel vacate times and the percentage of interfered time for the PNs (relative to the active period of the PN).
Fig. 8 represents the time and energy spent for the reference scenario.
Fig. 9 represents the gain in throughput for a saturated CR network.
Fig. 10 illustrates the effect of increasing the false alarm probability.

Fig. 11 illustrates the effect of increasing the number of network nodes.

Fig. 12 illustrates the effect of the number of network nodes on the channel vacate time.

## Detailed Description of Embodiment(s)

The emerging cognitive radio (CR) scenario is of interest because of its potential for order-of-magnitude gains in spectral efficiency and network performance. The following instantiation of the CR scenario is considered in the present invention. The upcoming policy with respect to CR, as supported by regulatory bodies (FCC, WAPECS) in a trend towards more dynamic spectrum policy, specifies that a certain technology referred to as the primary technology, has the rights for interference-free communication in certain bands. These bands can however also be used for CR communication, when they are unused by said primary technology. Whenever a Primary Network (PN) activates on the channel, the CR stations have to vacate a channel as soon as possible. A primary network is a network of rightful owners of the spectrum and cannot be harmfully interfered. The meaning of 'harmfully' in this context depends on the willingness of the primary network to share spectrum. The CRs are arranged for determining which frequencies are in use by PNs. They navigate their communication to avoid channels where they could cause interference to the PNs. The transmission range for the CRs can be larger than the CR sensing range for primary networks (e.g., when the transmission range for a Primary User (PU) is small or adaptive). By 'primary user' is meant a user of a Primary Network. Primary users have a protected status, in that their communication cannot be harmfully interfered. Since these primary users cannot be detected by every CR (because of a limited CR-sensing range), distributed sensing is needed, whereby the CR nodes collaborate to get a common spectral view.

Reconfigurable radios and in particular software defined radios (SDRs) are often considered as key enablers for implementing CRs, due to their inherent flexibility. In the present invention a low-power SDR as described in WO2007/132016 is considered, which combines reconfigurable analogue front-end blocks and a heterogeneous multi-processor system-on-chip SDR-based baseband platform. Radio and sensing aspects are tackled by the combination of analogue and digital front-ends. The analogue front-ends (AFEs) comprise a power amplifier, tuneable filtering, tuneable matching and micro-electromechanical switches. The digital front ends (DFEs) perform automatic gain control (AGC) and time synchronization on the samples provided by the AFEs. The DFE associated to the analogue front-end is further also arranged for radio signal scanning and detection.

At system level, the energy bottleneck can be leveraged by capitalizing on the opportunistic partitioning and energy-scalable design of both hardware and software architectures. In case of burst-based signal reception, detection functions have a high duty cycle and hence need ultra low power implementation. The DFEs activate a function only when necessary. By making the duty cycle of high power states as low as possible, power consumption can be reduced (see Fig. 2). More details are provided in WO2007/132016

All radios are assumed to have an interface optimized for scanning purposes, e.g. a suitable DFE as already mentioned. Hence, communicating and scanning can be done in parallel (but still in different channels) and the impact of scanning can be reduced.

Regarding sensing at system-level, IEEE 802.22 WG distinguishes two mechanisms : fast sensing (e.g., energy detection) which can be done very quickly (under 1ms/channel) and fine sensing (e.g., 25ms in the case of field-sync detection for digital TV systems).

In Table 1 some power models for a typical SDR implementation are given as an example. When a radio is in the doze state, it cannot receive any packet. The power consumption of the fast sensing mode is assumed to be the same as that of the idle state. This means the AFE is on, but the digital receive functions are not activated. In this state limited scanning such as energy detection can be performed.

For the fine sensing the radio has to be in the receive state, since a coherent detection technique is assumed.

Table 1

|  | Analog | Digital | $\Sigma$ |
|---|---|---|---|
| Doze | 0mW | 10mW | 10mW |
| Idle | 120mW | 11mW | 131mW |
| Receive | 120mW | 370mW | 490mW |
| Transmit | 600mW | 300mW | 900mW |

The present invention discloses a multichannel MAC protocol, that enables opportunistic spectrum sharing. With 'opportunistic' is meant that a secondary network can use the spectrum that is owned by primary users, if no harmful interference is generated towards any primary network. An improved spectrum usage is thus obtained. By borrowing licensed spectrum this protocol enables significant gain. Since borrowing licensed spectrum has to be done with care, the protocol is designed to protect primary users from CR interference even in hidden terminal situations.

A timing structure similar to that of IEEE 802.11 PSM is used. Time is divided into CR beacon intervals. Before describing in detail the protocol according to the invention, the various assumptions are summarized. A system is considered having C+1 channels available for use, each channel having the same bandwidth. None of these channels overlap, so packets transmitted over different channels do not interfere with each other. One of the channels is a cognitive control channel (CCC). This channel is assumed to be free of primary user interference. The active period of the primary users is substantially longer than the length of the CR beacon interval. Within the IEEE 802.22, where a TV station stays active for more than a few hours, this is certainly true. In other cases the beacon interval can be adapted to achieve this. The transceivers are capable of switching their channel dynamically. A node cannot sense a channel used for CR communication, because this CR communication could mask primary user signals due to the interference it causes. A radio can thus only scan a silenced channel i.e. a channel where CR communication has been temporarily forbidden.

Each CR preferably maintains two data structures. One is called the Spectral Image of Primary users (SIP) vector, the other the Secondary users Channel Load (SCL) vector. The former contains the nodes' local view on the spectrum, while the latter is used for selecting the communication channel. The SIP vector has three types of entries :

- No Primary User is active on channel c (SIP[c] = 0)
- A Primary User is active on channel c (SIP[c] = 1)
- The spectral image of channel c is uncertain. (SIP[c] = 2)

The SCL vector contains the expected load of CR communication on each channel. If a node wishes to transmit he picks the spectral opportunity with the lowest SCL.

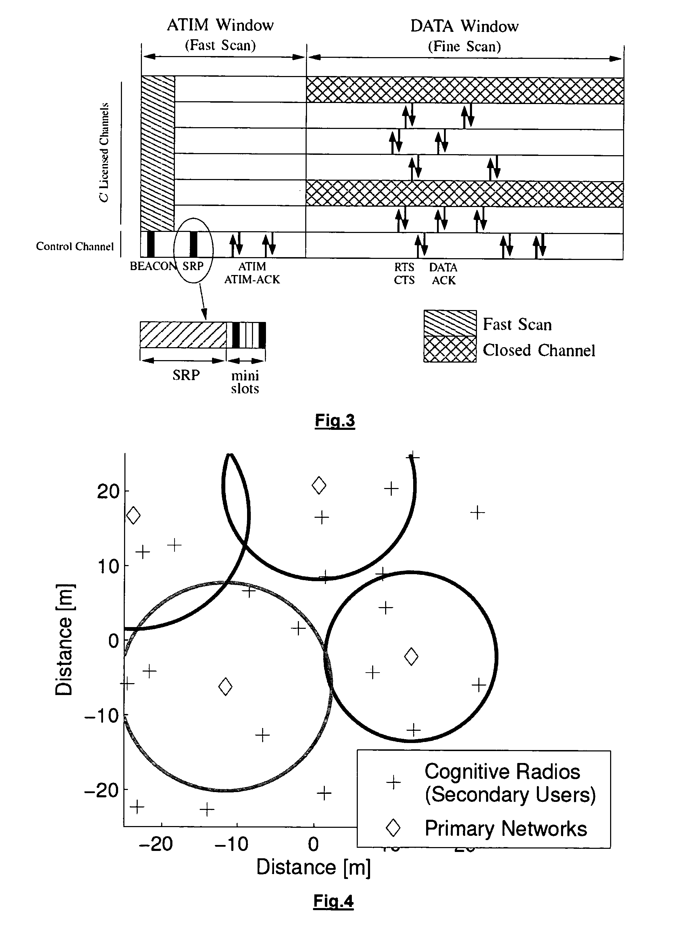

Fig.3 shows the timing structure of the proposed protocol. The global time is divided into fixed length beacon intervals in which four phases can be distinguished. During Phase I the nodes contend to transmit a beacon and perform a fast scan. Phase II is used to learn the spectral opportunities based on the spectral images from all the nodes in the network. In Phase III traffic is indicated and channels are negotiated. Phase IV is reserved for data exchange and fine sensing.

When a node joins the network, it performs a fine scanning for every channel. The outcome of this fine scanning is stored in the SIP vector.

During Phase I the nodes compete to transmit their beacon, which is carrying their local time, on the control channel. Following the Timer Synchronization Function (TSF) of IEEE 802.11, a node only updates its time if the time carried in the received beacon is faster than its own local time. Phase I is also used to scan the licensed channels. The nodes randomly select one of the channels to perform a fast scan. This scan is used to update the SIP value of the scanned channel. It will either confirm the present SIP value or not. If it confirms the SIP, no further action is taken. Otherwise, the SIP value is updated to 2, which stands for uncertainty. The protocol is capable to support also other, possibly more optimal, channel selection strategies.

In Phase II the CRs determine the network-wide view on spectral opportunities by listening to C minislots. A minislot is a short slot in time (with a granularity in the order of that for making a Clear Channel assessment (for example about 40 μs), rather than at packet level). During a minislot nodes can transmit a busy signal. If a minislot is sensed busy, the corresponding channel is excluded for communication. A node transmits a busy signal in the corresponding minislot for every channel where the SIP is not 0. As mentioned, this closes down the channel for data exchange. The purpose of this can be twofold. First of all, if a primary user is detected, the channel needs to be closed so that the primary user is not interfered with. A second reason to close a channel is when there exists uncertainty about the presence of the primary user. Quieting the channel is then needed to perform a fine sensing in this channel. As synchronization needs to be tight, the node that has sent the beacon sends a Scan-Result Packet (SRP). After this packet has been sent or received (i.e. the packet is used for synchronisation), all nodes simultaneously initiate the minislot protocol. To integrate the protocol in a legacy IEEE 802.11 network, the SRP can be masked as a Ready To Send (RTS) packet, so that all legacy nodes defer their transmissions for the duration of the minislot period.

During Phase III traffic is indicated with ATIM packets (Ad Hoc Traffic Indication Messages) on the control channel. The nodes having packets to transmit, indicate this by sending ATIM packets during this phase. In the ATIM packet a node inserts the preferred channel for data transmission, based on their SCL vector, and its queue status. A node updates its SCL vector each time it overhears an ATIM packet. If the receiving node agrees on the chosen channel and has an interface available for communication, it sends an ATIM ACK packet. After Phase IV the nodes that have exchanged ATIMs, stay awake until they have completed data exchange. The nodes that have neither transmitted nor received ATIM packets, enter a doze state until the next beacon interval.

Phase IV is used for data exchange and fine sensing. Nodes that have set a SIP to 'uncertain', rescan the corresponding channel, which is now free of internal traffic. The SIP value for this channel is updated to the outcome of the fine scanning. Data exchange follows the normal DCF procedure from IEEE 802.11, with RTS/CTS exchange. An additional feature is that nodes are allowed to enter a doze state when they complete data exchange in a Phase V (i.e.

if the transmit queue is empty).

Now some simulation results are presented. First the simulation set-up is discussed. Next the results for a reference scenario are presented. Further the results from several parameter studies are presented. The results illustrate that cognitive radio performance can be increased significantly by borrowing licensed spectrum. It is also shown that the protocol is able to protect the licensed systems from CR interference.

Extensive simulations were performed using the network simulator ns-2.29 (see S.McCanne et al., 'ns Network Simulator (version 2)' on http://www.isi.edu.nsnam/ns). The considered scenario is represented in Fig. 4. The CRs are randomly deployed and assumed to be within each other's transmission range. The base stations of the primary networks (PNs) are also randomly deployed in this area, but have lower transmission transmission range than the CRs. The circles in Fig. 4 denote the areas in which the signal from a PN can be detected by the CRs. The hidden terminal problem is thus present in the simulations. The previously given Table 1 lists the power figures used in simulations. For fine sensing (feature detection) the scanning interface is assumed to be in the receive state for 25ms and for fast scanning (energy detection) the idle state is assumed for 1 ms.

The transmission rate for both control messages and data packets is set to 2 Mbps. The data packet length is fixed at 512 bytes. The beacon interval is 100ms and the length of Phase IV to 20ms (see Fig. 3). The length of the minislots is chosen to be 40 $\mu$s. Traffic load for the CRs is 50 packets per second. If not otherwise stated, the Probability of a False Alarm (PFA) for one CR is set to 4% for fast scanning and to 1% for fine scanning. The Probability of a Missed Detection (PMD) for one CR is always equal to PFA.

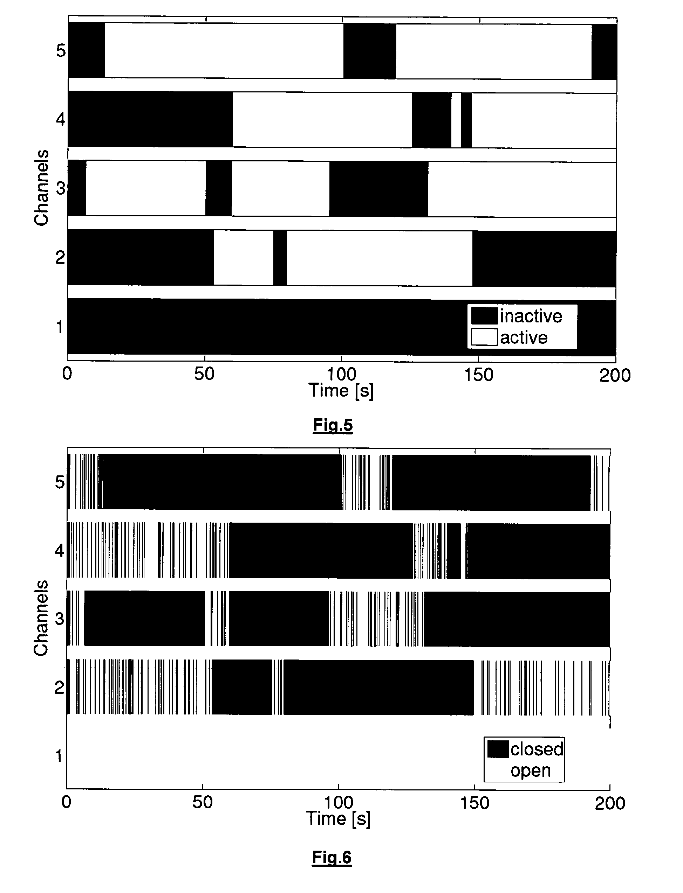

For the reference scenario, the randomly generated topology shown in Fig. 4 is used. Other results agree with the outcome of this reference scenario. Five channels are used and four PNs. Only 10 of the 20 CRs are communicating. The control channel (channel 1) is presumed to be free of primary users (PUs). The activity of the PNs is randomly generated and can be seen in Fig. 5.

In Fig.6 the channel states are shown for the CRs. The CRs clearly close down the channel if a PN is active. During the non-active periods of the PNs, a barcode-like behaviour is found. This is a result of the false alarms from the fast scanning, which signals the need to close down the channel for the fine scanning. The impact of the PFA on the throughput of the secondary users is evaluated later on in this description.

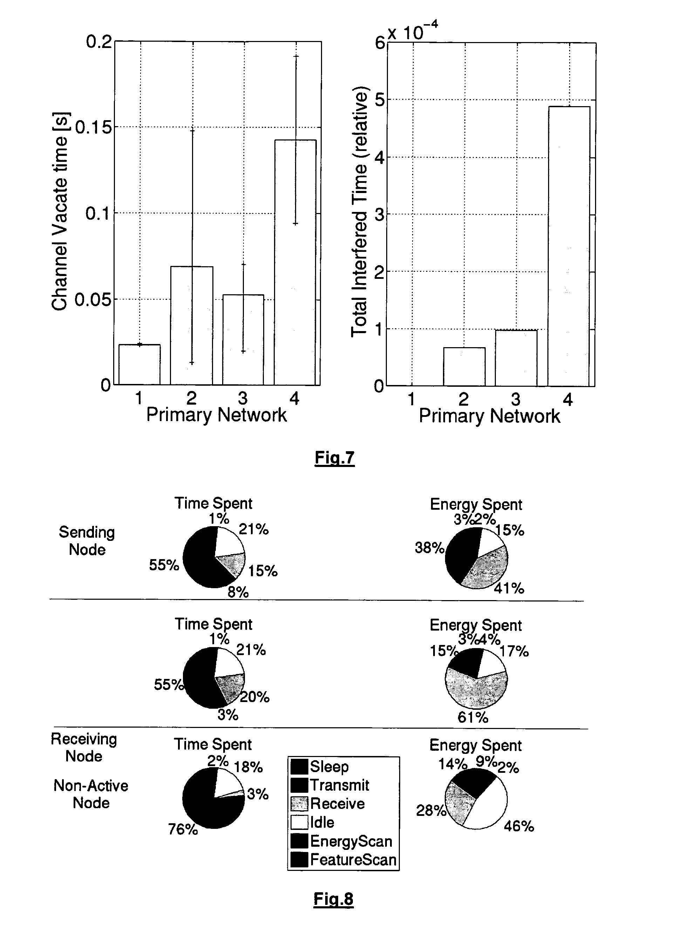

In Fig. 7 at the left the Channel Vacate Times (CVT) are shown for the different PUs. The CVT is the time it takes to close down a channel for CR communicates after a PN activated on this channel. For every PU, the CVT is lower than 100ms. This indicates that the chance of a network-wide missed detection is low, because the CVTs are lower than the length of the beacon interval.

Also the percentage of time during which the PN is interfered with is plotted in Fig.7 at the right. This happens when a CR sends a packet on a channel occupied by an active PN. This percentage is low (less than 0.06% for PU 1 on channel 2 and significantly less for the others). This interference time is dependent on the traffic load of the CRs. If idle times are ignored, the PUs would be interfered with an upper limit determined by the CVT for a saturated CR network. Here there is an additional benefit of sleeping after the last packet in the transmission queue is sent. A CR tries to send his packets as fast as possible and defers packets, generated after the transmit queue is emptied, to the next beacon interval. In the next beacon interval the spectral image is refreshed, so these packets can be guided to a free channel, if a PU happens to be activated.

Finally the energy consumption for the CR nodes is studied (see Fig. 8). For active CRs energy waste due to scanning is limited to 4% of the total spent energy. A non-active radio has a larger share of consumed energy due to scanning, since this factor stays the same, while the total consumed energy is less. However, even in this situation the scanning energy contributes less than 10% to the total energy consumed. The transmit factor can be reduced with distributed transmit power control, which can also reduce interference to primary users (PUs). The main contributor to energy consumption is the receive state. This overhearing of non-useful packets (i.e. a packet is not intended for the receiving node in question and it is not a broadcast packet), can be reduced if more channels are available. Fig. 6 illustrates that only a few channels can be used for CR communication at the same time. If more channels are available or PU activity is lower, the communication can be spread across the different channels and less overhearing overhead is incurred. For the non-active node the idle factor is dominant. As discussed previously this can be optimized by making the ATIM window adaptive to the number of active CR links.

Now different parameters are studied. First the impact of spectrum opportunities on CR performance is investigated. Then the impact of the network-wide PFA and PMD is studied.

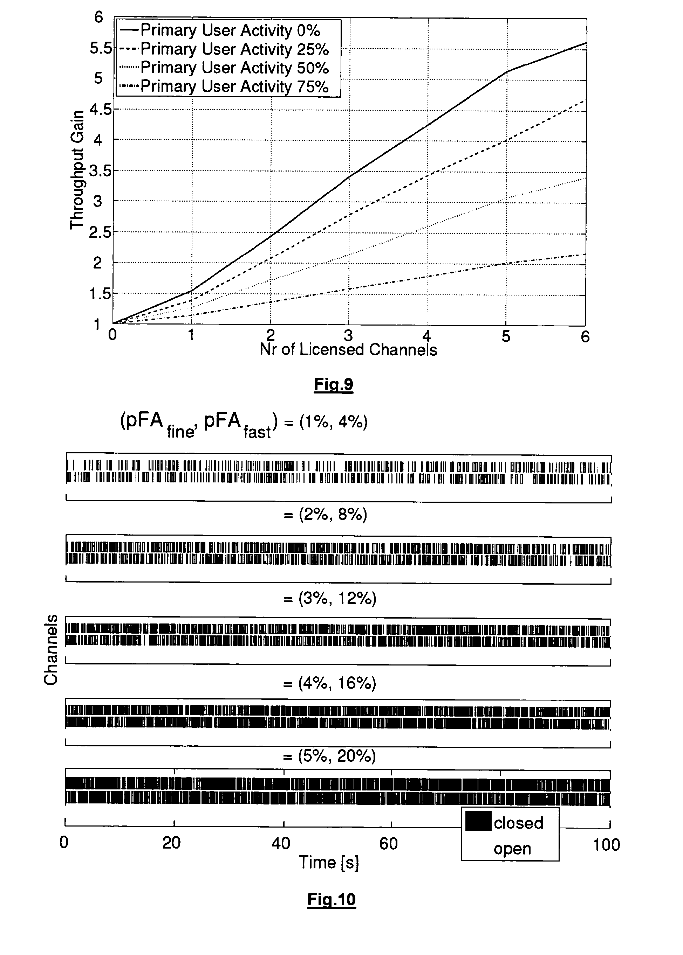

CR performance is impacted by the amount of spectrum opportunities in time and frequency. In Fig.9 the throughput for a saturated CR network (20 CR nodes, all communicating) in different scenarios is shown. PFA is set to 1% for the fine scanning and 3% for the fast scanning. Increasing the spectrum opportunities in time (decreasing the PU activity) or in frequency (increasing the number of licensed channels) results in higher gains compared to only using the control channel. In the best case presented (6 extra licensed channels, no PU activity) a gain factor of 5.6 can be obtained.

Other parameters which impact the performance of the protocol are the network-wide PFA and PMD per channel. These probabilities can easily be derived as :

$$\mathrm{PFA} = 1 - (1 - \mathrm{PFA_i})^{N/C} \qquad (1)$$

$$\mathrm{PMD} = \mathrm{PMD}_i^{M/C} \qquad (2)$$

where C is the number of licensed channels, N the number of CRs in the network and M the number of CRs in range of the PN considered.

Firstly, they are a function of the individual false alarm (FA) and missed detection chance. In Fig.10 is illustrated that increasing the FA probability has a huge impact on channel availability for the network. The FA probability is increased for fast scanning from 4% to 20%. Fine scanning is assumed to be four times as accurate as the fast scanning. In this simulation no PU is present and there are 20 CRs in the saturated network. A FA rate of 20% for the fast scanning almost completely removes the benefit of using 2 extra licensed channels in this scenario (from 200% to 20% increase in throughput).

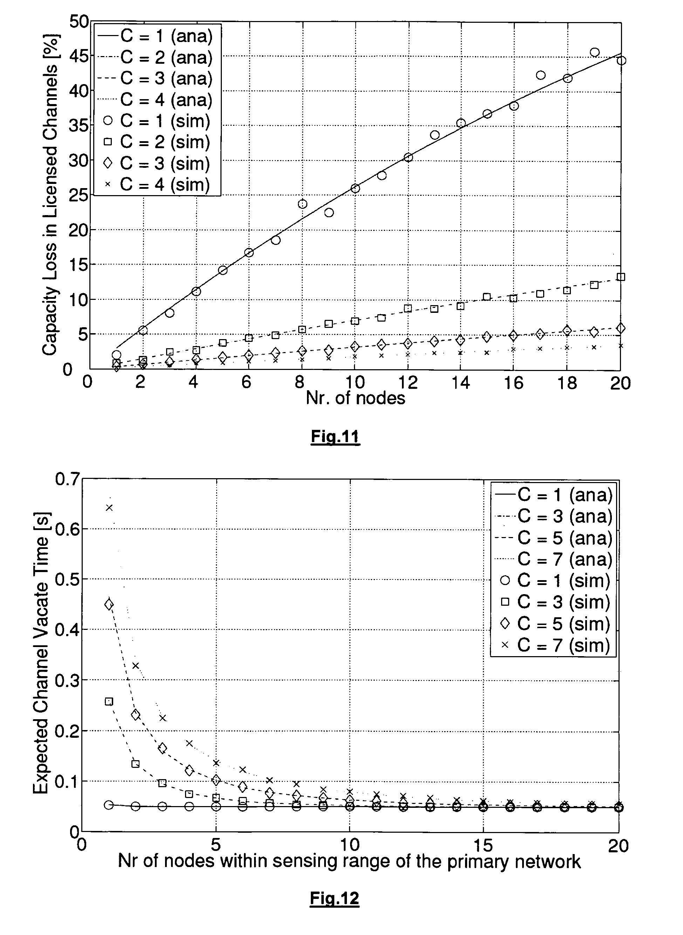

Increasing the number of nodes in the network also results into capacity loss for the licensed channels (see Fig.11 for a 200s simulation). The number of channels has the opposite effect. Since the nodes are now spread over different channels, a channel is less likely declared occupied due to a false alarm. When a channel closes down, it also has less impact, since only 1/C of the capacity is lost.

The probability of a network-wide missed detection decreases exponentially with the number of CRs capable of detecting a PN. Of course, if there is not a single CR able to sense the PN, interference cannot be avoided. The probability of opening a channel incorrectly when a channel has been declared occupied, is negligible. This is because a channel only opens when the fine scanning agrees with the fast scanning that there is indeed no PN present and when all nodes, capable of detecting the PN, have declared the channel as free. A PN is thus only interfered at startup. Here the most important factor is the Channel Vacate Time (CVT). The expected value of this CVT can be found to be:

$$E[\mathrm{CVT}] = \frac{\mathrm{BI}}{1 - (1 - \frac{1}{C}(1 - \mathrm{PMD_i}))^{M/C}} - \frac{\mathrm{BI}}{2} \qquad (3)$$

where BI is the beacon interval length, M the number of nodes able to detect the PN network and C the number of licensed channels. In Fig.12 it can be seen that even with random channel selection, the expected channel vacate time is below 150ms with only 5 CRs able to detect the PN. This can be further lowered by scanning the open channels more frequently than the closed channels (defensive strategy). On the other hand, this means that false alarms occur more frequently and channels are declared open more slowly. One could devise an explorative strategy by scanning the closed channels more frequently, but since CRs are only borrowing spectrum, protection of the PUs should be the prime concern.

The method according to the present invention is applicable in e.g. single hop and multi-hop communication schemes.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method for configuring a communication set-up, along a communication means with a plurality of non-overlapping channels and between a plurality of communication units with first communication units and second communication units, said first communication units being privileged in said communication set-up with respect to said second communication units, said second communication units having dynamically adaptable transceivers enabling channel switching, at least one of said second communication units being within the communication range of one of said first communication units, said method comprising the step of performing on at least one of said second communication units:

    (1) a step of determining information on the availability of said channels of said communication means for communication by said second communication units, at least taking into account whether said first communication units are active or not on said channels,
    (2) a step of selecting based on said information which channels to use for communication by said second communication units and subsequently,
    (3) adapting said second communication units transceivers for data communication via said selected channels.

2. Method as in claim 1, wherein said step of determining information at least takes into account the load of said second communication units on said channels.

3. Method as in claim 1 or 2, wherein said step of determining information includes the step of storing at each of said second communication units a first data structure indicating for each of said channels whether said first communication units are active or not on said channels or whether said second communication units are uncertain about said first communication units' use of said channel.

4. Method as in claim 2 or 3, wherein said step of determining information includes the step of storing at each of said second communication units a second data structure indicating for each of said channels the load of said second communication units.

5. Method as in any of the previous claims, wherein said step of selecting comprises determining whether said first communication units are active on a channel or not, or whether there is uncertainty about the status of said first communication units and if it is determined that a channel is used by a first communication unit and said status is uncertain, the channel is not considered for communication by a communication unit of said second communication units until a next configuration.

6. Method as in any of the previous claims, wherein said step of selecting includes the step of sending by at least one of said second communication units a first indicator if said second communication units needs to transmit data, said indicator including the preferred channel of said second communication unit.

7. Method of claim 6, wherein one of said channels is not used by said first communication units, said indicators being sent via said one channel.

8. Method of any of the previous claims wherein said step of selecting includes the step of selecting the channel with the lowest load as preferred channel.

9. Method of any of the previous claims, wherein said step of selecting includes the step of sending upon receipt of said first indicator of a sending second communication unit by at least one of said second communication units a second indicator if said receiving second communication unit being able to communicate along the preferred channel.

10. Method of any of the previous claims, further including the step of performing data communication with said adapted transceivers in accordance with the selected channels.

11. Method of claim 10, further including an additional step of determining information for those channels where said second communication is uncertain about said primary user use of said channel.

12. A communication system for use in a cognitive radio network comprising a plurality of communication units with first communication units and second communication units, whereby said first communication units are arranged for operating in a privileged mode with respect to said second communication units and whereby said second communication units have dynamically adaptable transceivers for enabling channel switching, and whereby at least one of said second communication units is arranged for determining information on the availability for communication of at least some of a plurality of non-overlapping channels, at least taking into account whether said first communication units are active or not on said channels, for selecting based on said information which channels to use for communication and for subsequently adapting said second communication units transceivers for data communication via said selected channels.

13. A communication device for use in a cognitive radio network, said cognitive radio network comprising a plurality of first communication units arranged for operating in a privileged mode with respect to said communication device, said communication device comprising a dynamically adaptable transceiver for enabling channel switching, said communication device being arranged for determining information on the availability for communication of at least some of a plurality of non-overlapping channels, at least taking into account whether said first communication units are active or not on said channels, for selecting based on said information which channels to use for communication and for subsequently adapting said transceiver for data communication via said selected channels.

14. Communication device as in claim 13, further comprising storage means for storing a first data structure indicative for each of said channels of whether said first communication units are active or not on said channels or whether said communication device is uncertain about said first communication units use of said channel.

15. Communication device as in claim 13 or 14, further comprising storage means for storing a second data structure indicative for each of said channels of the load of said communication device.

A BEACON ATIM DATA

B ATIM-ACK ACK

C Doze State
ATIM Wind ATIM Wind Time
Beacon Interval

**Fig.1**

% platform activated

Power consumption        Duty Cycle

probability of signal detection

power consumption

off     AGC     Time     Packet
                Sync    Decoding

**Fig.2**

**Fig.3**

**Fig.4**

**Fig.5**

**Fig.6**

**Fig.7**

**Fig.8**

**Fig.9**

**Fig.10**

**Fig.11**

**Fig.12**

## REFERENCES CITED IN THE DESCRIPTION

**Patent documents cited in the description**

*   WO 2007132016 A

**Non-patent literature cited in the description**

*   **TZAMALOUKAS et al.** Channel-Hopping Multiple Access. *Proc.ICC2000,* June 2000
*   **M. MILLER et al.** Improving Power Save Protocols Using Carrier Sensing for Dynamic Advertisement Window. *MASS 2005,* November 2005
*   **S.MCCANNE et al.** *ns Network Simulator, http://www.isi.edu.nsnam/ns*